# EUROPÄISCHE PATENTSCHRIFT

(11) **EP 1 521 021 B1**
(45) Veröffentlichungstag und Bekanntmachung des Hinweises auf die Patenterteilung: **16.08.2006**
(21) Anmeldenummer: 04016117.6
(22) Anmeldetag: 08.07.2004
(51) Int. Cl.: F16K 3/02

(54) **Schieberventil**
Sliding valve
Soupape

(30) Priorität: 02.10.2003 DE 20315223 U
(43) Veröffentlichungstag der Anmeldung: 06.04.2005
(73) Patentinhaber: Hawle Armaturen GmbH, 83395 Freilassing (DE)
(72) Erfinder: Katzenschwanz, Martin, 83416 Surheim (DE)
(74) Vertreter: Schwabe - Sandmair - Marx

(56) Entgegenhaltungen:
- DE-A- 3 146 994
- DE-C- 967 994
- GB-A- 839 280
- GB-A- 999 425
- GB-A- 1 174 157
- US-A- 5 004 210

## Beschreibung

Die Erfindung betrifft einen Schieberkeil für einen Fluidleitungsschieber. Solche Schieber dienen der Begrenzung bzw. Unterbrechung des Fluidstromes (gasförmiges oder flüssiges Medium) in einer Leitung, beispielsweise einer Gas- oder Wasserversorgungsleitung. Die Schieber enthalten gewöhnlich einen Schieberkeil der durch eine Spindel verschiebbar ist, wobei er in einen Fluidleitungskanal des Fluidleitungsschiebers eingebracht wird. Bekannte Schieberkeile weisen Metallkörper auf, die voll umfänglich mit einer weichen Kunststoff- oder Gummi-Überzugsschicht umgeben sind. Dieser Kunststoff- oder Gummiüberzug soll einerseits eine gute Abdichtung zwischen den Kanalwänden und dem Schieberkanal gewährleisten, andererseits schützt er den Schieberkeil vor Korrosion.

Solche bekannten Schieberkeile sind schwer und aufwendig in der Herstellung, insbesondere wird viel Kunststoff- bzw. Gummimaterial zum Überziehen des gesamten Keilkörpers verwendet. Wenn der Überzug beschädigt wird, kann es am Keilkörper zu Korrosion kommen.

Ein Schieberheil gemäß dem Oberbegriff des Anspruchs 1 ist aus der US 5,004,210 bekannt. Ein Kumtstaff-Absperrschieben mit Dichsträngen im Bereich der Umfangskanten eines Schieberelements geht aus der DE 34 46 994 A1 hervor.

Es ist die Aufgabe der vorliegenden Erfindung, einen Schieberkeil für einen Fluidleitungsschieber bereitzustellen, welcher zumindest einige der oben genannten Nachteile des Standes der Technik überwindet. Insbesondere soll der Schieberkeil leicht sein und unaufwändig, insbesondere mit geringem Materialaufwand hergestellt werden können.

Diese Aufgabe wird erfindungsgemäß durch einen Schieberkeil gemäß dem Anspruch 1 gelöst. Die Unteransprüche definieren vorteilhafte Ausführungsformen der Erfindung.

Ein Schieberkeil gemäß der vorliegenden Erfindung weist einen Keilkörper auf, der in einen Fluidleitungskanal des Fluidleitungsschiebers einbringbar ist und eine äußere Dichtung hat, welche für einen dichten Verschluss des Fluidleitungskanals bei vollständig eingebrachtem Schieberkeil sorgt. Die Vorteile des erfindungsgemäßen Schieberkeils resultieren insbesondere daraus, dass die Dichtung Dichtstränge umfasst, welche im Bereich der Umfangskanten des Keilkörpers an diesem angebracht sind. Durch die vorliegende Erfindung wird es nicht mehr notwendig, den Schieberkeil vollständig mit einem Überzug zu versehen, wodurch dieses Material im großen Umfang eingespart werden kann.

Der Keilkörper des erfindungsgemäßen Schieberkeils besteht aus einem nicht metallischen Material, insbesondere aus einem Kunststoffmaterial. Durch eine solche Ausgestaltung werden gewichtsmäßig leichte Keilkörper erzielt, die nicht korrodieren können.

Die Dichtstränge sind im oberen Teil des Keilkörpers an den Stirnseiten und im unteren Bereich des Keilkörpers an der Umfangsseite angeordnet. Durch eine solche Ausgestaltung dichtet der erfindungsgemäße Schieberkeil gerade dort in seinem Sitz ab, wo die entsprechenden Gegenflächen vorhanden sind, eine vollständige Abdichtung bzw. Sperrung des Fluidleitungskanals wird gewährleistet.

Bei einer bevorzugten Ausführungsform weist der Keilkörper nur im Bereich der Umfangskanten eine solche Dichtung auf.

Um den Schieberkeil besonders leicht zu gestalten, kann er innen mit einer im wesendlichen hohlen, durch Versteifungselemente verstärkten Struktur versehen werden, was ihm trotz der leichten Bauweise eine ausreichende Stabilität gibt.

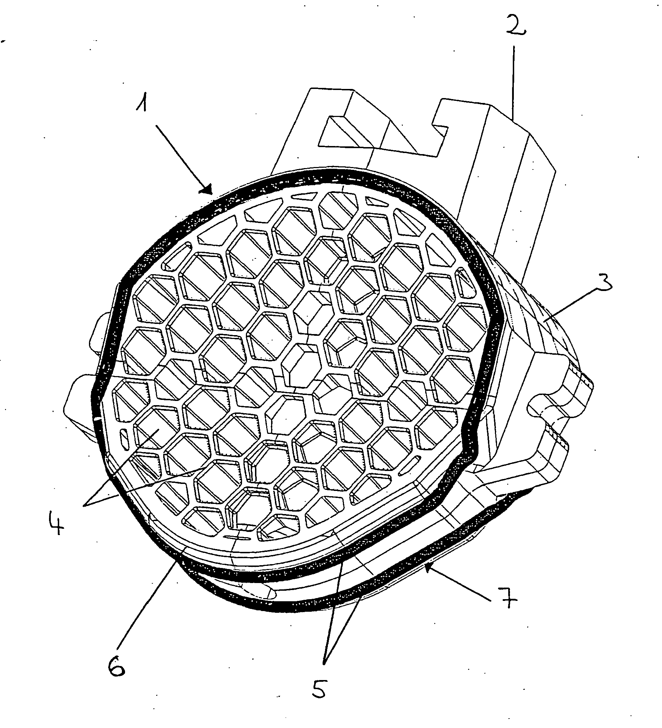

Die Erfindung wird im Weiteren anhand der beiliegenden einzigen Figur näher erläutert. Die hierin beschriebenen Elemente der Erfindung können einzeln oder in jedweder Kombination verwirklicht werden.

In der Figur ist der erfindungsgemäße Schieberkeil mit dem Bezugszeichen 1 versehen. Er weist einen Keilkörper 3 sowie einen Eingriff 2 auf, an dem das Verschiebungswerkzeug angreift.

Der Schieberkeil 1 ist auf einem Kunststoffmaterial mit ausreichender Stabilität hergestellt. Er ist natürlich insgesamt Fluid-undurchlässig, weist also im Inneren mindestens eine durchgezogene Wand auf, die in der Figur nicht sichtbar ist. Ansonsten hat er eine leichte aber stabile Hohlstruktur mit inneren Versteifungselementen, die durch das Bezugszeichen 4 angedeutet werden.

Im Bereich der Umfangskanten 6, 7 des Keilkörpers 3 sind Dichtstränge 5 angeordnet, im vorliegenden Fall Gummi-Dichtstränge, die eine eingesetzte Dichtkontur bilden. Diese Dichtkontur verläuft im oberen Teil des Keilkörpers 3 an den Stirnseiten des Keilkörpers 3, wird im mittleren Bereich umgelenkt und verläuft dann im unteren Bereich des Keilkörpers 3 an der Umfangsseite. Damit wird gewährleistet, dass der Schieberkeil eine Dichtkontur an den Stellen aufweist, wo er im Fluidleitungskanal an den Kanalwänden zu sitzen kommt.

Mit dieser Konstruktion ist ein gut abdichtender Schieberkeil geschaffen, der eine leichte Bauweise aufweist und materialsparend hergestellt werden kann.

## Patentansprüche

1. Schieberkeil (1) für einen Fluidleitungsschieber mit einem Keilkörper (3), der in einen Fluidleitungskanal des Fluidleitungsschiebers einbringbar ist und eine äußere Dichtung aufweist, welche für einen dichten Verschluss des Fluidleitungskanals bei vollständig eingebrachtem Schieberkeil (3) sorgt, wobei die Dichtung Dichtstränge (5) umfasst, welche im Bereich der Umfangskanten (6, 7) des Keilkörpers (3) an diesem angebracht sind, und dass der Keilkörper (3) aus einem nicht metallischen Material, insbesondere aus einem Kunststoffmaterial besteht, **dadurch gekennzeichnet, dass** die Dichtstränge im oberen Teil des Keilkörpers (3) an den Stimseiten und im unteren Bereich des Keilkörpers (3) an der Umfangsseite angeordnet sind.

2. Schieberkeil nach Anspruch 1, **dadurch gekennzeichnet, dass** der Keilkörper (3) nur im Bereich der Umfangskanten (6, 7) eine Dichtung aufweist.

3. Schieberkeil nach einem der Ansprüche 1 oder 2, **dadurch gekennzeichnet, dass** der Keilkörper (3) eine innen im wesentlichen hohle, durch Versteifungselemente (4) verstärkte Struktur aufweist.

## Claims

1. A sliding wedge (1) for a fluid conduit sluice valve comprising a wedge body (3) which can be inserted into a fluid conduit channel of the fluid conduit sluice valve and comprises an outer gasket which ensures a sealed closure of the fluid conduit channel when the wedge body (3) is fully inserted, wherein the gasket comprises sealing threads (5) which are attached to the wedge body (3) in the area of its circumferential edges (6, 7), and wherein the wedge body (3) consists of a non-metallic material, in particular a plastic material, **characterised in that** the sealing threads are arranged on the end faces in the upper portion of the wedge body (3) and on the circumferential side in the lower area of the wedge body (3).

2. The sliding wedge according to claim 1, **characterised in that** the wedge body (3) only comprises a gasket in the area of the circumferential edges (6, 7).

3. The sliding wedge according to any one of claims 1 or 2, **characterised in that** the wedge body (3) exhibits a structure which is substantially hollow on the inside and is reinforced by stiffening elements (4).

## Revendications

1. Coin de soupape (1) pour une soupape de conduite de fluide avec un corps de coin (3) qui peut être introduit dans un canal de conduite de fluide de la soupape de conduite de fluide et présente une étanchéité extérieure qui assure une fermeture étanche du canal de conduite de fluide lorsque le coin de soupape (3) est totalement introduit, l'étanchéité comprenant des cordons d'étanchéité (5) qui sont placés sur le corps de coin (3) dans les bords périphériques (6, 7) de celui-ci, et le corps de coin (3) étant constitué d'un matériau non métallique, en particulier d'un matériau plastique, **caractérisé en ce que** les cordons d'étanchéité sont disposés dans la partie supérieure du corps de coin (3) sur les faces frontales et dans la zone du corps de coin (3) sur le côté périphérique.

2. Coin de soupape selon la revendication 1, **caractérisé en ce que** le corps de coin (3) ne présente une étanchéité que dans la zone des bords périphériques (6, 7).

3. Coin de soupape selon l'une des revendications 1 ou 2, **caractérisé en ce que** le corps de coin (3) présente une structure sensiblement creuse à l'intérieur, renforcée par des éléments de rigidification (4).
